# DEMANDE DE BREVET EUROPEEN

(11) **EP 1 617 193 A2**
(43) Date de publication de la demande: **18.01.2006**
(21) Numéro de dépôt: 05291503.0
(22) Date de dépôt: 12.07.2005
(51) Int. Cl.: G01J 3/52, B44D 3/00

(54) **Plaque de référence de teinte, procédé de construction d'un abaque de référence de teinte et utilisation d'une telle plaque**

(30) Priorité: 16.07.2004 FR 0407938
(71) Demandeur: COMPAGNIE PLASTIC OMNIUM, 69007 Lyon (FR)
(72) Inventeur: Veiga, Nathalie, 01150 Lagnieu (FR); Aubanel, Laurent, 01320 Villette sur Ain (FR)
(74) Mandataire: Remy, Vincent Noel Paul

(57) **Abrégé**

L'invention concerne une plaque de référence (1) de teinte pour le contrôle de peinture de pièces de carrosserie de véhicules automobiles et un procédé de construction d'une abaque de référence de teinte pour pièces de carrosserie de véhicule automobile.

La plaque est constituée par une plaque-support souple.

## Description

La présente invention concerne une plaque de référence de teinte pour le contrôle de peinture de pièces de carrosserie de véhicules automobiles, un procédé de construction d'une abaque de référence de teinte et une utilisation d'une telle plaque.

On sait que les pièces de carrosserie qui sont peintes en dehors de la chaîne principale de montage d'un véhicule doivent être peintes en respectant des critères de coloris et d'état de surface précis, de manière à ce que ces pièces aient la même apparence que le reste de la carrosserie, qui est peint sur caisse.

On sait également que le réglage d'une chaine de peinture peut dériver en fonction de différents facteurs, comme par exemple l'hygrométrie, la température ambiante, la pression atmosphérique, et qu'il est impératif de surveiller les pièces à leur sortie de la chaîne de peinture, au moins pour contrôler leur qualité, voire pour ajuster en conséquence les réglages de la chaîne.

A cet effet, il est connu d'utiliser un appareil de mesure optique, tel que celui commercialisé sous la référence CARFLASH par la société américaine X-RITE.

Cet appareil doit être étalonné pour fournir une mesure suffisamment précise pour caractériser une dérive de teinte des pièces peintes.

Une difficulté spécifique aux pièces de carrosserie est que leur surface présente de nombreuses courbures et que l'appareil de mesure optique s'avère très sensible à cette courbure, même si l'on prend la précaution de l'orienter selon un axe de mesure normal à la surface de mesure.

Ainsi, l'inventeur de la présente invention a mis en lumière la nécessité de disposer de plaques de référence de teinte (également désignées plaques étalon dans le domaine technique concerné) ayant des rayons de courbure différents, pour que les valeurs fournies par l'appareil de mesure sur une surface présentant une courbure donnée puissent être comparées à des valeurs de référence correspondant sensiblement à la même courbure.

Cependant, la réalisation de plaques de référence ayant des courbures différentes requiert une attention particulière car chaque plaque constitue une pièce peinte isolément et il faut veiller à ce qu'une dispersion de teinte ne se produise par entre deux plaques censées correspondre à un même coloris.

La présente invention vise à éliminer cette difficulté et à simplifier l'obtention de plaques de référence de teinte, tout en améliorant leur fiabilité.

La présente invention a pour objet une plaque de référence de teinte pour pièces de carrosserie de véhicule automobile, destinée à l'étalonnage d'un appareil de mesure optique, caractérisée en ce qu'elle est constituée par une plaque-support souple, pouvant s'incurver jusqu'à un rayon de courbure de 50 mm.

Conformément à l'invention, la courbure de la plaque de référence peut être convexe ou concave.

L'invention résulte de l'observation, faite par l'inventeur, que contrairement aux idées reçues, le fait de courber une plaque peinte à plat, ou au contraire d'aplatir une plaque peinte courbée, n'a pas d'influence significative sur l'état de la couche de peinture appliquée sur la plaque, de sorte que les valeurs de mesure fournies par la plaque, courbée selon différentes courbures, constituent des valeurs de référence fiables, qui sont exemptes du risque de dispersion de teinte.

De façon plus précise, l'inventeur a remarqué l'invariabilité de l'évolution des mesures en fonction du rayon de courbure de la plaque, que l'on mesure différentes plaques rigides ayant des courbures différentes peintes avec la même peinture en réduisant au minimum la dispersion ou plusieurs fois une même plaque souple peinte avec la même peinture et courbée selon différentes courbures.

Pour un résultat équivalent, les plaques de référence souples selon l'invention procurent l'avantage que tout risque de dispersion est éliminé.

Un autre avantage des plaques souples selon l'invention est que l'on peut leur donner une courbure qui correspond exactement à celle des parties à contrôler des pièces de carrosserie dont on souhaite vérifier la qualité de peinture. Il suffit pour cela d'appliquer une plaque contre la partie à contrôler d'une pièce, peinte ou non, en lui faisant épouser sa courbure, ce qui permet de relever une mesure de référence servant à comparer les mesures ultérieurement prises sur les pièces contrôlées.

De façon plus générale, les plaques souples selon l'invention permettent de constituer des abaques montrant l'évolution de la mesure de référence en fonction du rayon de courbure. Grâce à de telles abaques, on peut ensuite comparer les mesures relevées sur une pièce à contrôler, quelque soit le rayon de courbure aux points de mesures, à condition de connaître ces rayons de courbure aux points de mesures. On peut par exemple, grâce aux abaques, ramener les valeurs de mesures à des valeurs équivalentes à rayon de courbure infini, pour exprimer un décalage de teinte à plat.

Selon d'autres caractéristiques avantageuses de l'invention, qui peuvent être prises seules ou en combinaison :
- la plaque-support est en tôle métallique,
- la plaque-support est en matière plastique,
- la plaque-support est en polypropylène, en polyéthylène, en PVC,
- la plaque-support est recouverte d'une peinture appliquée par pulvérisation,
- la plaque-support est un film polymère, par exemple celui commercialisé sous la référence VALOX par la société GENERAL ELECTRIC PLASTIC,
- la peinture comprend une couche de base de teinture et une couche de vernis.

L'invention s'applique au contrôle de toutes pièces de carrosserie, par exemple le bouclier de pare-chocs, le capot, les ailes, les panneaux de portière, le toit, le hayon, les bas de caisse, les spoïlers, les boîtiers de rétroviseurs extérieurs.

L'invention a également pour objet un procédé de construction d'une abaque de référence de teinte pour pièces de carrosserie de véhicule automobile, caractérisé en ce qu'il comporte les étapes suivantes :
- peinture à plat d'une plaque-support souple pouvant s'incurver jusqu'à un rayon de courbure de 50 millimètres,
- mise en place de la plaque-support sur différentes pièces présentant des courbures différentes,
- pour chaque courbure, mesure optique de la plaque pour obtenir une valeur de référence que l'on enregistre en association avec le rayon de courbure de la plaque.

De manière optionnelle, la mesure optique est une mesure d'au moins l'un des éléments de la liste constituée d'une teinte, d'un tendu, d'un grain et d'une brillance de la plaque.

Grâce à l'utilisation d'une plaque support souple, comme celle de l'invention précédemment définie, la construction d'une telle abaque s'avère particulièrement simple puisqu'il n'est pas nécessaire d'utiliser plusieurs plaques de référence de teinte. Une fois que l'on dispose de cette abaque, le contrôle de la peinture d'une pièce de carrosserie est très rapide puisqu'il suffit d'effectuer une mesure optique de la peinture de la pièce de carrosserie, de mesurer sa courbure et de vérifier dans l'abaque si la peinture est conforme à la consigne.

Ce procédé d'obtention de l'abaque est particulièrement avantageux pour contrôler une pièce de carrosserie dont la peinture est une peinture à effet, comme par exemple une peinture nacrée ou une peinture métallisée. En effet, l'impression visuelle donnée par une telle peinture varie beaucoup en fonction de la courbure.

L'invention a également pour objet une utilisation d'une plaque de référence de teinte pour pièce de carrosserie de véhicule automobile telle que précédemment définie, dans le but d'étalonner un appareil de mesure optique.

Afin de mieux faire comprendre l'invention, on va en décrire maintenant un mode de réalisation donné à titre d'exemple non limitatif de la portée de l'invention, en référence aux dessins annexés dans lesquels :
- la figure 1 représente une plaque de référence courbée sur une pièce présentant un premier rayon de courbure ;
- la figure 2 représente une plaque de référence courbée sur une pièce présentant un second rayon de courbure ;
- la figure 3 représente une abaque obtenue par mesure de différentes courbures d'une même plaque de référence.

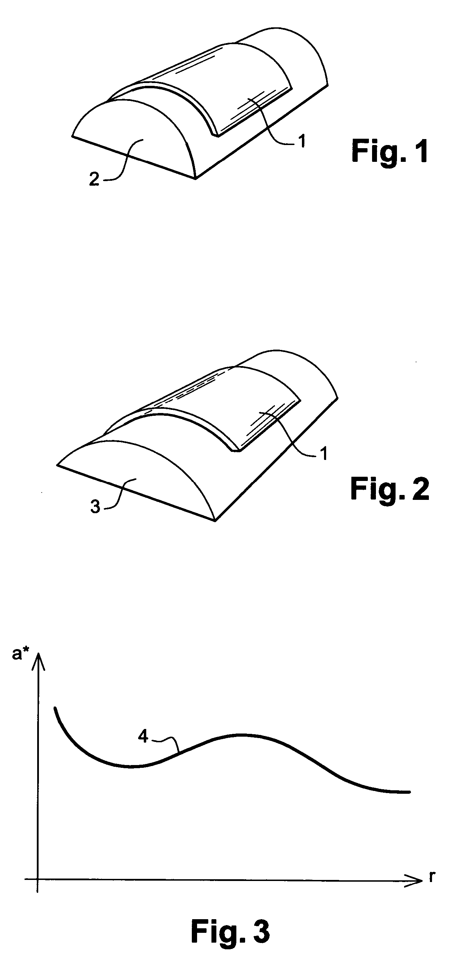

La plaque de référence 1 des figures 1 et 2 est réalisée sur un support constitué par un film polymère et a été peinte à plat selon un procédé de peinture conventionnel.

Le film polymère étant souple, la plaque a ensuite été placée sur différentes pièces présentant des courbures différentes, comme les pièces 2 et 3 des figures 1 et 2.

La plaque 1 appliquée contre la pièce 2, 3 épouse sa forme et prend la même courbure. On effectue alors une mesure optique sur cette plaque pour obtenir une valeur de référence que l'on enregistre en association avec le rayon de courbure de la plaque.

La mesure est de préférence une mesure multi-angles, c'est-à-dire une mesure selon au moins deux angles différents et; de préférence, selon trois à cinq angles répartis dans un même plan.

Les mesures concernent la teinte. Elles peuvent également concerner le tendu, le grain et la brillance.

En utilisant différentes courbures, on peut constituer une abaque telle que celle 4 représentée sur la figure 3. Cette abaque relie le paramètre a* au rayon de courbure r, pour un angle de mesure donné, qui est ici de 45°.

Grâce à une telle abaque, on peut ramener les mesures effectuées sur des pièces de carrosserie peintes à un rayon courbure infini, ce qui permettra d'exprimer des décalages de teinte à plat par rapport à la teinte de référence.

On voit que l'invention permet, avec une même plaque, d'obtenir des valeurs de référence pour plusieurs rayons de courbure, sans avoir à peindre différentes plaques de rayons de courbure différents.

Les mesures effectuées à l'aide des plaques de référence souples selon l'invention s'avèrent tout aussi fiables que des mesures faites avec des plaques rigides de rayons de courbure différents.

Il bien entendu que le mode de réalisation qui vient d'être décrit ne présente aucun caractère limitatif et qu'il pourra recevoir toute modification souhaitable sans sortir pour cela du cadre de l'invention.

## Revendications

1. Plaque (1) de référence de teinte pour pièces de carrosserie de véhicules automobiles, destinée à l'étalonnage d'un appareil de mesure optique, **caractérisée en ce qu'**elle est constituée par une plaque-support souple, pouvant s'incurver jusqu'à un rayon de courbure de 50 mm.

2. Plaque selon la revendication 1, constituée par une plaque-support en tôle métallique.

3. Plaque selon la revendication 1, constituée par une plaque-support en matière plastique.

4. Plaque selon la revendication 3, dans laquelle la plaque-support est en polypropylène, en polyéthylène, ou en PVC.

5. Plaque selon l'une quelconque des revendication 1 à 3, constituée par une plaque-support recouverte d'une peinture appliquée par pulvérisation.

6. Plaque selon la revendication 1, constituée par un film polymère.

7. Procédé de construction d'une abaque de référence de teinte pour pièces de carrosserie de véhicule automobile, **caractérisé en ce qu'**il comporte les étapes suivantes :
- peinture à plat d'une plaque-support souple pouvant s'incurver jusqu'à un rayon de courbure de 50 millimètres,
- mise en place de la plaque-support sur différentes pièces présentant des courbures différentes,
- pour chaque courbure, mesure optique de la plaque pour obtenir une valeur de référence que l'on enregistre en association avec le rayon de courbure de la plaque.

8. Procédé selon la revendication 7, dans lequel la mesure optique est une mesure d'au moins l'un des éléments de la liste constituée d'une teinte, d'un tendu, d'un grain et d'une brillance de la plaque.

9. Utilisation d'une plaque de référence de teinte pour pièce de carrosserie de véhicule automobile selon l'une quelconque des revendications 1 à 6, dans le but d'étalonner un appareil de mesure optique.
